# EUROPÄISCHE PATENTSCHRIFT

(11) **EP 3 563 443 B1**
(45) Veröffentlichungstag und Bekanntmachung des Hinweises auf die Patenterteilung: **06.09.2023**
(21) Anmeldenummer: 17826492.5
(22) Anmeldetag: 19.12.2017
(51) Int. Cl.: H01M 8/023, H01M 8/0232, H01M 8/026, H01M 8/0245, H01M 8/0247, C25B 15/08, B32B 15/01, C25B 9/00

(54) **VERFAHREN ZUR HERSTELLUNG EINER STRÖMUNGSPLATTE FÜR EINE BRENNSTOFFZELLE UND/ODER EINEN ELEKTROLYSEUR**
METHOD FOR PRODUCING A FLOW PLATE FOR A FUEL CELL AND/OR AN ELECTROLYZER
PROCÉDÉ DE FABRICATION D'UNE PLAQUE DE DISTRIBUTION DESTINÉE À UNE PILE À COMBUSTIBLE ET/OU UN ÉLECTROLYSEUR

(30) Priorität: 27.12.2016 DE 102016226234
(43) Veröffentlichungstag der Anmeldung: 06.11.2019
(73) Patentinhaber: Robert Bosch GmbH, 70442 Stuttgart (DE)
(72) Erfinder: SAUTER, Ulrich, 76199 Karlsruhe (DE); OHS, Jan Hendrik, 71272 Renningen (DE); SCHOENBAUER, Stefan, 71254 Ditzingen (DE)
(86) Internationale Anmeldenummer: PCT/EP2017/083580
(87) Internationale Veröffentlichungsnummer: WO 2018/122045

(56) Entgegenhaltungen:
- EP-A1- 0 147 912
- EP-A1- 1 328 030
- DE-A1- 10 163 631
- DE-T5-112011 103 324
- JP-A- 2007 141 743
- US-A- 4 729 871

## Beschreibung

### Stand der Technik

Es ist bereits eine Strömungsplatte für Brennstoffzellen bekannt, welche eine Strömungsplatte mit zumindest einem Strömungselement aufweist, wobei das Strömungselement eine Schaumstruktur aufweist. Zudem ist bekannt, das Strömungselement mit einem Substrat zu versintern. EP1328030 A1, JP2007141743A, DE112011103324T5 und US4729871A offenbaren jeweils Verfahren zur Herstellung von Strömungsplatten. DE10163631A1 offenbart eine bipolare Platte für eine Brennstoffzelle und EP0147912A1 offenbart eine Vorrichtung zur Herstellung von Fasern aus geschmolzenem Metall.

### Offenbarung der Erfindung

Die Erfindung geht aus von einem Verfahren zur Herstellung einer Strömungsplatte für eine Brennstoffzelle, insbesondere eine PEM-Brennstoffzelle, und/oder einen Elektrolyseur, wobei die Strömungsplatte zumindest ein Strömungselement aufweist, welches zumindest teilweise aus Metallfasern besteht. Die Erfindung ist ein Verfahren gemäss Anspruch 1 und eine Stömungsplatte gemäss Anspruch 8. Bevorzugte Ausführungen werden in der abhängigen Ansprüchen 2 bis 7 definiert.

Es wird vorgeschlagen, dass in zumindest einem Verfahrensschritt die Metallfasern mittels zumindest einer Ausrichteinheit ausgerichtet werden.

Unter einer "Brennstoffzelle" soll insbesondere eine Einheit verstanden werden, welche dazu vorgesehen ist, zumindest eine chemische Reaktionsenergie zumindest eines, insbesondere kontinuierlich zugeführten, Brenngases, insbesondere Wasserstoff und/oder Kohlenstoffmonoxid, und zumindest eines Oxidationsmittels, insbesondere Sauerstoff, insbesondere in elektrische Energie umzuwandeln. Unter einem "Elektrolyseur" soll insbesondere eine Einheit verstanden werden, welche zu einer Durchführung einer Elektrolyse vorgesehen ist, wobei insbesondere Elektroden an denen Gase entstehen, vorzugsweise Wasserstoff und Sauerstoff, durch eine Membran getrennt sind. Unter "vorgesehen" soll insbesondere ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Strömungsplatte" soll insbesondere eine mechanische Einheit verstanden werden, welche zu einer insbesondere elektrischen Kontaktierung von zumindest einer Brennstoffzelle und/oder von zumindest zwei insbesondere benachbarter Brennstoffzellen und/oder zu einer Versorgung einer Brennstoffzelle mit einem Brenngas, insbesondere Wasserstoff, und/oder Sauerstoff, und/oder zu einer Entsorgung zumindest eines Reaktionsprodukts, insbesondere Wasser und/oder Wasserdampf, vorgesehen ist. Insbesondere kann die Strömungsplatte als eine Monopolarplatte, als eine Bipolarplatte und/oder als eine Endplatte und/oder als eine Gasdiffusionsanlage ausgebildet sein. Das Strömungselement ist insbesondere zu einer Zufuhr einer Brennstoffzelle mit einem Brenngas, insbesondere Wasserstoff, und/oder Sauerstoff, und/oder zu einer Abfuhr zumindest eines Reaktionsprodukts, insbesondere Wasser und/oder Wasserdampf, vorgesehen. Insbesondere weist das Strömungselement zumindest einen und vorzugsweise eine Vielzahl von Strömungskanälen auf. Unter einem "Strömungskanal" soll insbesondere ein Kanal verstanden werden, der zumindest teilweise zu einer Führung einer Strömung, insbesondere eines Zustroms und/oder eines Abstroms eines Brenngases, insbesondere Wasserstoff und/oder Kohlenstoffmonoxid, und/oder zumindest eines Oxidationsmittels, insbesondere Sauerstoff vorgesehen ist, und der eine Strömung in Strömungsrichtung gesehen unmittelbar zumindest teilweise, vorzugsweise auf drei Seiten und besonders vorteilhaft vollständig umschließt.

Unter einer "Metallfaser" soll insbesondere ein metallisches Element verstanden werden, dessen Längserstreckung zumindest 10-mal, insbesondere wenigstens 20-mal und vorzugsweise mindestens 50-mal größer ist als eine zur Längserstreckung senkrechte Quererstreckung des Elements. Vorzugsweise bestehen die Metallfasern bei einer Anwendung in Brennstoffzellen aus einem Edelstahl, vorteilhaft aus 316L, wobei bei einer Anwendung in Elektrolyseuren die Metallfasern vorteilhaft aus Titan und/oder einer Titanlegierung bestehen. Unter "ausrichten" soll insbesondere ein aktiver Vorgang verstanden werden, wobei die Metallfasern vorzugsweise bewusst platziert werden. Insbesondere ist das Verfahren mittels Lichtmikroskopie am Erzeugnis nachweisbar.

Hierdurch kann ein gattungsgemäßes Verfahren mit verbesserten Eigenschaften hinsichtlich einer Herstellung einer Strömungsplatte für Brennstoffzellen und/oder Elektrolyseure bereitgestellt werden. Insbesondere kann eine Flexibilität vorteilhaft verbessert werden. Insbesondere kann vorteilhaft eine Strömungsplatte, insbesondere für den Einsatz als Bipolarplatte und/oder in Gasdiffusionsanlage hergestellt werden, wobei gleichzeitig Kontaktwiderstände und/oder Strömungswiderstände vorteilhaft minimiert werden können. Ferner kann vorteilhaft mittels der Ausrichteinheit eine glatte Oberfläche erzeugt werden, wodurch vorteilhaft ein Strömungswiderstand vermindert werden kann. Insbesondere kann eine Porosität der Strömungsplatte vorteilhaft erhöht werden.

In einer bevorzugten Ausgestaltung des Verfahrens wird vorgeschlagen, dass in dem Verfahrensschritt die Metallfasern auf zumindest ein Substrat abgeschieden werden. Unter einem "Substrat" soll ein Element verstanden werden, welches als Trägermaterial dient. Insbesondere kann das Substrat einen Grundkörper der Strömungsplatte ausbilden, wobei alternativ auch vorstellbar ist, dass die Metallfasern bei der Herstellung der Strömungsplatte vom Substrat gelöst werden, um später mit einem Grundkörper der Strömungsplatte verbunden zu werden Das Substrat ist insbesondere aus einem dünnen Blech und/oder eine dünne Folie gebildet, welches vorzugsweise aus demselben metallischen Material wie die Metallfasern besteht. Vorteilhaft wird in zumindest einem Verfahrensschritt das Substrat mittels zumindest einer Zuführwalze einer Beschichtungsstrecke zugeführt. Unter einer "Beschichtungsstrecke" soll ein Bereich verstanden werden, in dem die Metallfasern auf das Substrat abgeschieden werden. Unter einer "Zuführwalze" soll eine Walze verstanden werden, welche dazu vorgesehen ist, das Substrat der Beschichtungsstrecke zuzuführen. Insbesondere sind die Metallfasern zumindest in dem Verfahrensschritt in einem zumindest teilweise erweichten Zustand. Darunter, das die Metallfasern auf das Substrat abgeschieden werden, soll ein schleudern und/oder spritzen und/oder abtropfen der Metallfasern auf Substrat verstanden werden, wobei eine Struktur entsteht. Hierdurch kann vorteilhaft eine mechanische Stabilität verbessert werden.

Weiterhin wird vorgeschlagen, dass die Metallfasern gerichtet auf das Substrat abgeschieden werden. Darunter soll verstanden werden, dass die Metallfasern auf dem Substrat eine gerichtete Struktur bilden. Unter einer "gerichteten Struktur" soll insbesondere eine Struktur verstanden werden, welche eine erkennbare Regelmäßigkeit und/oder Anordnung von Metallfasern auf dem Substrat aufweist. Die Metallfasern sind in einem Flachen Winkel aufeinander geschichtet. Vorzugsweise weisen die Metallfasern in gleicher Ebene einen definierten Abstand in Längsrichtung auf. Insbesondere bilden die Metallfasern zumindest teilweise die Strömungskanäle, welche insbesondere zumindest abschnittsweise zumindest im Wesentlichen parallel und/oder alternierend zueinander verlaufen. Hierdurch kann vorteilhaft ein Strömungswiderstand vermindert werden.

In einer weiteren Ausgestaltung wird vorgeschlagen, dass die Metallfasern mit dem Substrat verbunden werden. Darunter soll insbesondere verstanden werden, dass das Substrat mit den Metallfasern materialschlüssig verbunden wird. Unter "materialschlüssig verbunden" soll insbesondere verstanden werden, dass die Masseteile durch atomare oder molekulare Kräfte zusammengehalten werden, hierbei entsteht insbesondere ein Kontakt welcher einem Schweißkontakt und/oder einem lokalen Sinterkontakt gleicht. Vorzugsweise entsteht der Kontakt beim Auftreffen der erweichten Metallfasern auf das Substrat. Durch die Erfindungsgemäße Ausgestaltung kann vorteilhaft ein Kontaktwiderstand zwischen den materialschlüssig verbundenen Teilen erreicht werden. Weiterhin kann vorteilhaft eine mechanische Stabilität verbessert werden.

Erfindungsgemäss werden die Metallfasern in dem Verfahrensschritt über eine zumindest zeitweise und vorzugsweise dauerhaft rotierende und/oder in axiale Richtung oszillierende Walze der Ausrichteinheit, insbesondere auf das Substrat, abgeschieden. Unter einer "axialen Richtung" soll eine Richtung verstanden welchen, welche zumindest im Wesentlichen parallel zu einer Rotationsachse der Walze ist. Unter "im Wesentlichen parallel" soll hier eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere bestimmt die Walze die Eigenschaften der Metallfasern. Vorzugsweise wird mittels der Rotationsrichtung der Walze eine Orientierung der Metallfasern in Längsrichtung des Substrats bereitgestellt. Hierbei soll unter "Längsrichtung" insbesondere eine Richtung parallel zur Vorschubrichtung des Substrats verstanden werden. Vorteilhaft wird die Metallstruktur mittels der axialen Rotation aufgebaut, wobei insbesondere das dreidimensionale Netzwerk an Metallfasern entsteht. Vorzugsweise wird eine Länge der Metallfasern mittels des Durchmessers der Walze und/oder deren Rotationsfrequenz bestimmt. Vorteilhaft haben die Metallfasern eine Faserlänge von insbesondere zumindest 10 cm, vorzugsweise von mindestens 5 cm, vorteilhaft von wenigstens 2 cm und besonders vorteilhaft von zumindest 1 cm. Die Ausrichteinheit weist ein Schmelzbad auf, welches vorteilhaft mit einem Gasdruck beaufschlagt werden Das Schmelzbad ist dazu vorgesehen geschmolzenes Metall auf die rotierende und/oder in axiale Richtung oszillierende Walze abzuscheiden. In einer bevorzugten Ausgestaltung wird vorgeschlagen, dass das Schmelzbad zumindest ein Düsenelement aufweist, wobei das Drüsenelement dazu vorgesehen ist geschmolzene Metallfasern auf die Walze abzuscheiden. Hierbei werden die Metallfasern mittels der rotierenden und/oder in axiale Richtung oszillierenden Walze optimiert. Hierdurch kann vorteilhaft eine gerichtete Struktur hergestellt werden. Weiterhin kann vorteilhaft eine Konstruktion vereinfacht werden.

Erfindungsgemäss werden die Metallfasern in dem Verfahrensschritt durch die Walze hergestellt. Hierbei wird mittels des Schmelzbads ein Metallfilm in Längsrichtung auf die rotierende und/oder in axiale Richtung oszillierende Walze abgeschieden. Dabei werden in zumindest einem weiteren Verfahrensschritt, mittels den Eigenschaften der Walze die Metallfasern bereitgestellt, welche auf das Substrat abgeschieden werden. Wobei die Eigenschaften der Metallfasern lediglich mittels der rotierenden und/oder in axiale Richtung oszillierenden Walze bestimmt werden. Hierdurch kann vorteilhaft eine gerichtete Struktur hergestellt werden. Ferner kann vorteilhaft eine Konstruktion weiter vereinfacht werden.

In einer besonders bevorzugten Ausgestaltung der Erfindung wird vorgeschlagen, dass ein Durchmesser der Metallfasern mittels zumindest einer Walzeneigenschaft, insbesondere einer Rillengeometrie von Rillen und/oder einer Benetzungseigenschaft, der Walze eingestellt wird. Unter einer "Walzeneigenschaft" soll insbesondere eine Eigenschaft der Walze verstanden werden, welche die Metallfasern zumindest teilweise beeinflusst. Unter einer "Benetzungseigenschaft" soll insbesondere eine Haftungsfähigkeit von zumindest einem Molekül an einer festen Grenzfläche verstanden werden. Insbesondere wird der Durchmesser zudem zumindest teilweise durch eine Rotations- und Oszillationsfrequenz bestimmt. Insbesondere ist die Oberfläche der Walze dabei bevorzugt rillenförmig mikrostrukturiert, wobei die Rillen vorzugsweise entlang eines Umfangs der Walze verlaufen. Unter "rillenförmig" soll insbesondere eine Vertiefung und/oder eine Projektion verstanden werden. Unter "mikrostrukturiert" soll insbesondere eine Rillenstruktur verstanden werden, welche vorzugsweise im Mikrobereich ist. Hierbei entstehen vorzugsweise die Metallfasern, welche vorzugsweise einen Faserdurchmesser von insbesondere zwischen 1 µm und 1000 µm, vorzugsweise zwischen 5 µm und 750 µm, vorteilhaft zwischen 10 µm und 500 µm, besonders vorteilhaft zwischen 25 µm und 400 µm, und besonders bevorzugt zwischen 50 µm und 300 µm aufweisen. Hierdurch kann vorteilhaft eine Konstruktion vorteilhaft vereinfacht werden. Weiterhin kann eine Bestimmung des Durchmessers zumindest einer Metallfaser weiter optimiert werden.

Es wird vorgeschlagen, dass eine Welligkeit der Metallfasern mittels einer Rotationsgeschwindigkeit der Walze und/oder mittels einer Gasanströmung der Metallfasern bei der Herstellung eingestellt wird. Unter einer "Welligkeit" soll insbesondere das Verhältnis des Abstandes zwischen dem höchsten und niedrigsten Punkt der Faser zum Durchmesser der Faser verstanden werden. Vorzugsweise ist die Gasanströmung entgegen der Flugrichtung der erweichten Metallfasern und insbesondere zwischen der Walze und Substrat. Die Theorie der aerodynamisch getriebenen Wellenbildung von Schmelzfäden ist beispielsweise in [Jens Eggers and Emmanuel Villermaux, 2008, Rep. Prog. Phys. 71 036601 doi:10.1088/0034-4885/71/3/036601] beschrieben. Hierdurch kann vorteilhaft ein Aufbau einer Struktur vorteilhaft verbessert werden. Insbesondere kann eine gerichtete Struktur optimiert werden.

Erfindungsgemäss werden Lagen von Metallfasern übereinander angeordnet. Hierfür wird insbesondere eine Ausrichteinheit und vorzugsweise zumindest eine weitere Ausrichteinheit verwendet. Erfindungsgemäss entstehen beim Übereinanderschichten der Metallfasern mehrere Lagen an Metallfasern. Vorteilhaft werden zwischen 2 und 10 Lagen und besonders bevorzugt zwischen 2 und 5 Lagen erzeugt werden. Vorzugsweise weist die Struktur eine dicke von mehreren 100 µm auf, insbesondere maximal 2000 µm, vorzugsweise höchstens 1000 µm, vorteilhaft maximal 700 µm, und besonders vorteilhaft höchstens 500 µm. Insbesondere entsteht ein dreidimensionales Netzwerk an Metallfasern auf dem Substrat. Unter einem "dreidimensionalen Netzwerk" soll insbesondere verstanden werden, dass die Metallfasern untereinander kontaktieren und eine gerichtete Struktur bilden, wobei insbesondere eine dreidimensionale Matrix entsteht. Hierdurch kann vorteilhaft ein durchgehender elektrischer Kontakt senkrecht zur Gasströmungsrichtung durch das dreidimensionale Netzwerk sichergestellt werden. Ferner kann vorteilhaft eine Möglichkeit der Integration von Strömungsverteilerstruktur und Strom-/Gasverteilerstruktur in einem Bauteil durch Gradienten in der Porengrößenverteilung realisiert werden, insbesondere durch eine mehrlagige Beschichtung bei gleichzeitiger Veränderung des mittleren Faserdurchmessers. Weiterhin können gleichzeitig Kontaktwiderstände und Strömungswiderstände minimiert werden.

In einer weiteren bevorzugten Ausgestaltung der Erfindung wird vorgeschlagen, dass eine Struktur bestehend aus den Metallfasern in zumindest einem Verfahrensschritt kalandriert wird. Unter "kalandriert" soll insbesondere ein Vorgang verstanden werden, welcher zumindest ein Element glättet sowie eine definierte Gesamtdicke gibt. Vorzugsweise werden hierfür Walzen verwendet. Insbesondere wird in dem Verfahrensschritt vorzugsweise das Substrat, welches mit den Metallfasern beschichtet ist, zumindest zwei gegenläufig rotierende Walzen zugeführt. Insbesondere sind die Walzen steif gelagert. Vorteilhaft wird der Struktur bestehend aus Metallfasern, mittels den Walzen eine definierte Gesamtdicke und Porosität gegeben. Vorzugsweise bestimmt der Abstand zwischen den Walzen eine Enddicke der Struktur. Vorteilhaft werden nach oben herausragende Metallfasern mittels den Walzen abgeknickt. Insbesondere weist die erzeugte Struktur eine Porosität von insbesondere mindestens 60%, vorzugsweise zumindest 70%, vorteilhaft von mindestens 80%, besonders vorteilhaft von zumindest 85% und besonders bevorzugt von zumindest 90%. Hierdurch kann vorteilhaft eine Gesamtdicke und/oder eine Porosität einfach bestimmt werden. Weiterhin kann vorteilhaft eine möglichst flache Oberfläche bereitgestellt werden.

In zumindest einem weiteren Ausführungsbeispiel wird vorgeschlagen, dass zumindest ein weiteres Substrat zur Beschichtung zugeführt wird. Vorzugsweise wird das weitere Substrat auf die Struktur aus Metallfasern zugeführt, welche bereits mit dem ersten Substrat verbunden ist. Insbesondere wird das weitere Substrat mit den noch zumindest teilweise erweichten Metallfasern verbunden. Hierdurch kann die Struktur vorteilhaft mit dem weiteren Substrat materialschlüssig verbunden werden. Darüber hinaus kann vorteilhaft gleichzeitig eine Strömungsverteilerstruktur für Reaktionsgase und auf der Rückseite eine Strömungsverteilerstruktur für Kühlwasser bereitgestellt werden. Ferner kann vorteilhaft in der so erzeugten mehrschichtigen Strömungsplatte ein besonders geringer elektrischer Übergangswiderstand erreicht werden.

In einer alternativen Ausführung ist denkbar, dass das weitere Substrat in zumindest einem weiteren Verfahrensschritt mittels einer weiteren Ausrichtungseinheit beschichtet wird. In zumindest einem weiteren Verfahrensschritt wird vorzugsweise das Beschichtete weitere Substrat dem Beschichteten ersten Substrat zugeführt. Hierdurch kann insbesondere eine Effizienz gesteigert werden.

In einer weiteren alternativen Ausführung wird vorgeschlagen, dass zumindest ein Substrat verwendet wird, welches zumindest eine lösbare Oberfläche aufweist. Dabei soll insbesondere verstanden werden, dass die Struktur vorteilhaft nach dem kalandrieren von dem Substrat lösbar ist. Hierdurch kann vorteilhaft eine freistehende Gasdiffusionsanlage bereitgestellt werden.

Zudem wird eine Vorrichtung zur Durchführung eines Verfahrens vorgeschlagen, welche die Ausrichteinheit aufweist, welche nicht Teil der beanspruchten Erfindung ist. Vorzugsweise umfasst die Vorrichtung eine Ausrichteinheit, welche vorzugsweise eine rotierende und/oder in axiale Richtung oszillierende Walze und ein Schmelzbad umfasst. Die Ausrichteinheit ist insbesondere dazu vorgesehen die Metallfasern herzustellen und/oder die Eigenschaften der Metallfasern zu bestimmen. Darüber hinaus umfasst die Vorrichtung vorteilhaft eine Zuführwalze, welche insbesondere zumindest dazu vorgesehen ist das Substrat der Beschichtungsstrecke zuzuführen. Ferner umfasst die Vorrichtung vorteilhaft einen Kalander, welcher insbesondere zumindest dazu vorgesehen ist die Struktur sowie das zumindest eine Substrat zu kalandrieren.

### Zeichnung

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil einer Strömungsplatte in einer schematischen Schnittdarstellung,
- Fig. 2: eine Vorrichtung zur Herstellung der Strömungsplatte, wobei die Vorrichtung nicht Teil der beanspruchten Erfindung ist, in einer schematischen Darstellung,
- Fig. 3: einen Teil einer weiteren Strömungsplatte in einer schematischen Schnittdarstellung und
- Fig. 4: eine Vorrichtung zur Herstellung der weiteren Strömungsplatte, wobei die Vorrichtung nicht Teil der beanspruchten Erfindung ist, in einer schematischen Darstellung.

### Beschreibung der Ausführungsbeispiele

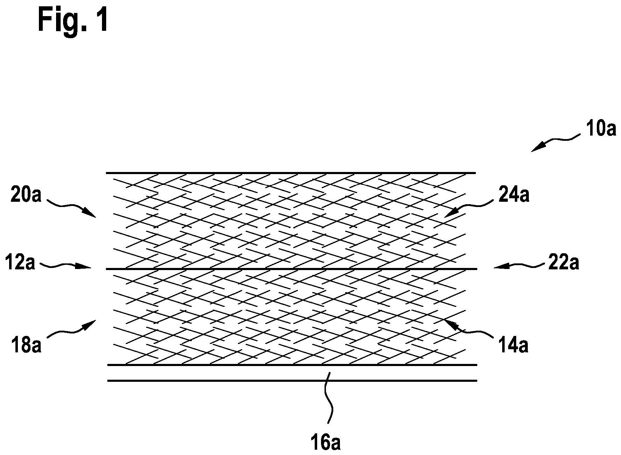

Die Figur 1 zeigt eine schematische Schnittdarstellung eines Teils einer Strömungsplatte 10a. Die Strömungsplatte 10a umfasst ein Strömungselement 12a und ein Substrat 16a. In einer alternativen Ausführung ist es vorstellbar, dass die Strömungsplatte 10a lediglich das Strömungselement 12a umfasst.

Das Substrat 16a ist aus einem Blech und/oder einer Folie gebildet. Das Substrat 16a dient als Trägermaterial. Das Substrat 16a bildet einen Grundkörper der Strömungsplatte 10a. Das Substrat 16a dient zur mechanischen Stabilität.

Das Strömungselement 12a weist Metallfasern 14a auf. Die Metallfasern 14a sind der Übersicht halber stark schematisch dargestellt. Die Metallfasern 14a sind materialschlüssig mit dem Substrat 16a verbunden. Die Metallfasern 14a bilden zumindest im Wesentlichen zumindest einen Strömungskanal 24a. Die Strömungskanäle 24a verlaufen zumindest abschnittsweise zumindest im Wesentlichen parallel und/oder alternierend zueinander. Die Metallfasern 14a sind gerichtete auf dem Substrat 16a angeordnet. Die Metallfasern 14a bilden eine gerichtete Struktur 22a. Die Struktur 22a weist eine erkennbare Regelmäßigkeit und/oder Anordnung von Metallfasern 14a auf dem Substrat 16a auf. Die Metallfasern 14a sind erfindungsgemäss in einem Winkel, welcher kleiner als 5° ist, aufeinander geschichtet. Die Metallfasern 14a weisen in gleicher Ebene betrachtet einen definierten Abstand in Längsrichtung auf.

Das Strömungselement 12a weist mehrere Lagen 18a, 20a auf. Die Lagen 18a, 20a weisen ein dreidimensionales Netzwerk an Metallfasern 14a auf. Die Metallfasern 14a bilden eine dreidimensionale Matrix. Die Metallfasern 14a kontaktieren untereinander. Der Kontakt ist dazu vorgesehen, ein durchgehenden elektrischer Kontakt senkrecht zur Gasströmungsrichtung durch das dreidimensionale Netzwerk sicherzustellen.

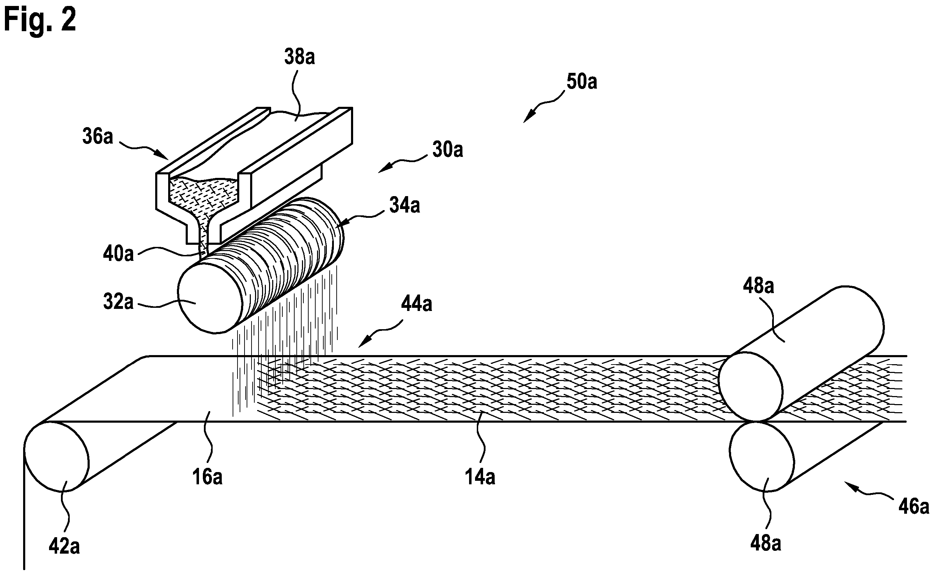

Die Figur 2 zeigt eine Vorrichtung 50a zur Durchführung des Verfahrens zur Herstellung der Strömungsplatte 10a für eine Brennstoffzelle, insbesondere eine PEM-Brennstoffzelle, und/oder einen Elektrolyseur.

Die Vorrichtung 50a, welche nicht Teil der beanspruchten Erfindung ist, weist eine Ausrichteinheit 30a auf. Die Ausrichteinheit 30a umfasst ein Schmelzbad 36a. Das Schmelzbad 36a kann mit einem Gasdruck beaufschlagt werden. Das Schmelzbad 36a ist dazu vorgesehen flüssiges Metall 38a auf die Walze 32a abzuscheiden. Das Schmelzbad 36a ist dazu vorgesehen einen flüssigen Metallfilm 40a in Längsrichtung auf die Walze 32a abzuscheiden. Die Ausrichteinheit 30a ist dazu vorgesehen die Metallfasern 14a herzustellen. In zumindest einem Verfahrensschritt werden die Metallfasern 14a mittels zumindest einer Ausrichteinheit 30a ausgerichtet. Die Metallfasern 14a werden in dem Verfahrensschritt über eine zumindest zeitweise rotierende und/oder in axiale Richtung oszillierende Walze 32a der Ausrichteinheit 30a abgeschieden. Die Ausrichteinheit 30a ist dazu vorgesehen die Eigenschaften der Metallfasern 14a zu bestimmen. Die Eigenschaften der Metallfasern 14a werden mittels der Walze 32a bestimmt.

Die Metallfasern 14a werden in dem Verfahrensschritt durch die Walze 32a hergestellt. Mittels der Rotationsrichtung der Walze 32a wird eine Orientierung der Metallfasern 14a bereitgestellt. Die Orientierung ist in Längsrichtung des Substrats 16a. Die Metallstruktur 22a wird mittels der axialen Rotation aufgebaut. Dabei entsteht ein dreidimensionales Netzwerk an Metallfasern 14a. Eine Länge der Metallfasern 14a wird mittels des Durchmessers der Walze 32a bestimmt. Eine Länge der Metallfasern 14a wird mittels einer Rotationsfrequenz der Walze 32a bestimmt. Die Metallfasern 14a haben eine Faserlänge von zumindest 1 cm. Ein Durchmesser der Metallfasern 14a wird mittels zumindest einer Walzeneigenschaft, insbesondere einer Rillengeometrie von Rillen 34a und/oder einer Benetzungseigenschaft, der Walze 32a eingestellt. Der Durchmesser der Metallfasern 14a wird zumindest teilweise durch eine Rotations- und Oszillationsfrequenz der Walze 32a bestimmt. Die Oberfläche der Walze 32a ist rillenförmig mikrostrukturiert. Die Rillen 34a verlaufen entlang eines Umfangs der Walze 32a. Die Rillen 34a sind als Vertiefung und/oder als Projektion ausgebildet. Die Metallfasern 14a weisen einen Faserdurchmesser zwischen 50 µm und 300 µm auf.

Eine Welligkeit der Metallfasern 14a wird mittels einer Rotationsgeschwindigkeit der Walze 32a und/oder mittels einer Gasanströmung der Metallfasern 14a bei der Herstellung eingestellt. Die Gasanströmung ist entgegen der Flugrichtung der erweichten Metallfasern 14a. Die Gasanströmung wird zwischen der Walze 32a und Substrat 16a bereitgestellt.

In dem Verfahrensschritt werden die Metallfasern 14a auf zumindest ein Substrat 16a abgeschieden werden. Die Metallfasern 14a befinden sich im zumindest teilweise erweichten Zustand. Die Metallfasern 14a werden mit dem Substrat 16a verbunden. Die Metallfasern 14a werden materialschlüssig mit dem Substrat 16a verbunden. Die Verbindung entsteht beim Auftreffen der erweichten Metallfasern 14a auf das Substrat 16a. Die Metallfasern 14a werden gerichtet auf das Substrat 16a abgeschieden. Die Metallfasern 14a bilden die gerichtete Struktur 22a.

Alternativ weist die Vorrichtung 50a zumindest eine weitere Ausrichteinheiten 30a auf. Hierbei werden mehrere Lagen 18a, 20a von Metallfasern 14a übereinander angeordnet. Es entsteht das dreidimensionales Netzwerk an Metallfasern 14a auf dem Substrat 16a.

Die Vorrichtung 50a, welche nicht Teil der beanspruchten Erfindung ist, umfasst eine Zuführwalze 42a. Die Zuführwalze 42a ist zumindest dazu vorgesehen, das Substrat 16a einer Beschichtungsstrecke 44a zuzuführen.

Die Vorrichtung 50a umfasst einen Kalander 46a. Der Kalander 46a ist zumindest dazu vorgesehen ein Element zu glätten sowie eine definierte Gesamtdicke zu geben. Der Kalander 46a weist zumindest eine Walze 48a auf. Eine Struktur 22a bestehend aus den Metallfasern 14a wird in zumindest einem Verfahrensschritt kalandriert. In dem Verfahrensschritt wird die Struktur 22a bestehend aus Metallfasern 14a zwei gegenläufig rotierenden Walzen 48a zugeführt. Die Walzen 48a sind steif gelagert. Der Struktur 22a wird mittels den Walzen 48a eine definierte Gesamtdicke und Porosität gegeben. Der Abstand zwischen den Walzen 48a bestimmt eine Enddicke der Struktur 22a. Nach oben herausragende Metallfasern 14a werden mittels den Walzen 48a abgeknickt. Die erzeugte Struktur 22a weist eine Porosität von zumindest 90% auf.

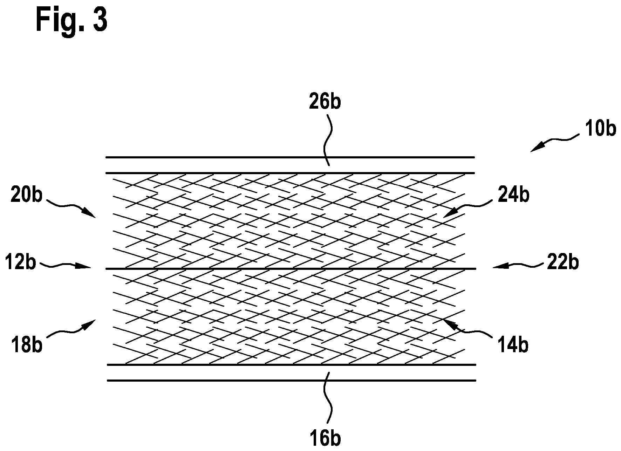

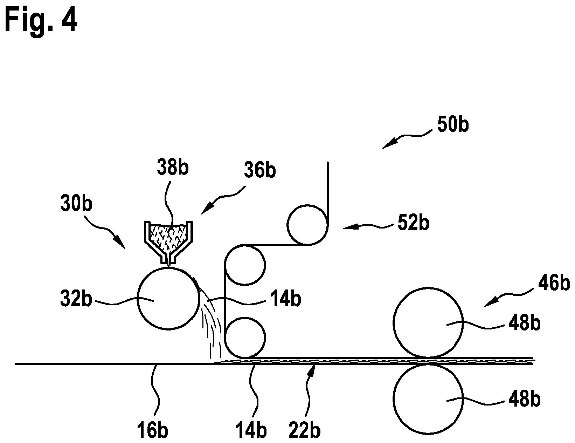

In der Figur 3 ist ein weiteres Ausführungsbeispiel der Erfindung gezeigt. Die nachfolgenden Beschreibungen und die Zeichnung beschränken sich im Wesentlichen auf die Unterschiede zwischen dem Ausführungsbeispiel, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In dem Ausführungsbeispiel der Figuren 3 und 4 ist der Buchstabe a durch den Buchstaben b ersetzt.

Die Figur 3 zeigt eine schematische Schnittdarstellung eines Teils einer alternativen Strömungsplatte 10b. Die Strömungsplatte 10b umfasst ein Strömungselement 12b, ein Substrat 16b und zumindest ein weiteres Substrat 26b. Das weitere Substrat 26b ist aus demselben Material wie das erste Substrat 16b. Hierdurch werden gleichzeitig eine Strömungsverteilerstruktur für Reaktionsgase und auf der Rückseite und eine Strömungsverteilerstruktur für Kühlwasser bereitgestellt.

Die Figur 4 zeigt eine Vorrichtung 50b zur Durchführung des Verfahrens zur Herstellung der alternativen Strömungsplatte 10b, welche nicht Teil der beanspruchten Erfindung ist. Die Vorrichtung 50b weist zumindest ein Walzensystem 52b auf. Das weitere Substrat 26b wird in zumindest einem Verfahrensschritt zur Beschichtung der Struktur 22b zugeführt. Die Struktur 22b ist bereits mit dem ersten Substrat 16b verbunden. Das weitere Substrat 26b wird mit den noch zumindest teilweise erweichten Metallfasern 14b materialschlüssig verbunden. Hierdurch kann ein geringer elektrischer Übergangswiderstand erreicht werden.

## Patentansprüche

1. Verfahren zur Herstellung einer Strömungsplatte (10a; 10b) für eine Brennstoffzelle, insbesondere eine PEM-Brennstoffzelle, und/oder einen Elektrolyseur, wobei die Strömungsplatte (10a; 10b) zumindest ein Strömungselement (12a; 12b) aufweist, welches zumindest teilweise aus Metallfasern (14a; 14b) besteht, wobei in zumindest einem Verfahrensschritt die Metallfasern (14a; 14b) mittels zumindest einer Ausrichteinheit (30a; 30b) ausgerichtet werden, wobei die Ausrichteinheit (30a; 30b) ein Schmelzbad (36a) umfasst, wobei das Schmelzbad (36a) dazu vorgesehen ist flüssiges Metall (38a) auf die Walze (32a) abzuscheiden,
**dadurch gekennzeichnet, dass** die Metallfasern (14a; 14b) in dem Verfahrensschritt über eine zumindest zeitweise rotierende und/oder in axiale Richtung oszillierende Walze (32a; 32b) der Ausrichteinheit (30a; 30b) abgeschieden werden, wobei die Metallfasern (14a; 14b) in dem Verfahrensschritt durch die Walze (32a; 32b) hergestellt werden, wobei mehrere Lagen (18a; 20a; 18b; 20b) von Metallfasern (14a; 14b) übereinander angeordnet werden, wobei die Metallfasern (14a) in einem Winkel, welcher kleiner als 5° ist, aufeinander geschichtet werden.

2. Verfahren nach Anspruch 1, **dadurch gekennzeichnet, dass** in dem Verfahrensschritt die Metallfasern (14a; 14b) auf zumindest ein Substrat (16a; 16b) abgeschieden werden.

3. Verfahren nach Anspruch 2, **dadurch gekennzeichnet, dass** die Metallfasern (14a; 14b) gerichtet auf das Substrat (16a; 16b) abgeschieden werden.

4. Verfahren nach Anspruch 2 oder 3, **dadurch gekennzeichnet, dass** die Metallfasern (14a; 14b) mit dem Substrat (16a; 16b) verbunden werden.

5. Verfahren nach einem der vorhergehenden Ansprüche, **dadurch gekennzeichnet, dass** ein Durchmesser der Metallfasern (14a; 14b) mittels zumindest einer Walzeneigenschaft, insbesondere einer Rillengeometrie von Rillen (34a; 34b) und/oder einer Benetzungseigenschaft, der Walze (32a; 32b) eingestellt wird.

6. Verfahren nach einem der vorhergehenden Ansprüche, **dadurch gekennzeichnet, dass** eine Welligkeit der Metallfasern (14a; 14b) mittels einer Rotationsgeschwindigkeit der Walze (32a; 32b) und/oder mittels einer Gasanströmung der Metallfasern (14a; 14b) bei der Herstellung eingestellt wird.

7. Verfahren nach einem der vorhergehenden Ansprüche, **dadurch gekennzeichnet, dass** eine Struktur (22a; 22b) bestehend aus den Metallfasern (14a; 14b) in zumindest einem Verfahrensschritt kalandriert wird.

8. Strömungsplatte (10a; 10b), hergestellt mittels eines Verfahrens nach einem der Ansprüche 1 bis 7, wobei die Strömungsplatte (10a; 10b) zumindest ein Strömungselement (12a; 12b) aufweist, welches zumindest teilweise aus Metallfasern (14a; 14b) besteht, wobei mehrere Lagen (18a; 20a; 18b; 20b) von Metallfasern (14a; 14b) übereinander angeordnet sind, wobei die Metallfasern (14a) in einem Winkel, welcher kleiner als 5° ist, aufeinander geschichtet sind.

## Claims

1. Method for producing a flow plate (10a; 10b) for a fuel cell, in particular a PEM fuel cell, and/or an electrolyzer, wherein the flow plate (10a; 10b) comprises at least one flow element (12a; 12b) which at least partially consists of metal fibres (14a; 14b), wherein in at least one method step the metal fibres (14a; 14b) are aligned by means of at least one alignment unit (30a; 30b), wherein the alignment unit (30a; 30b) comprises a melt bath (36a), wherein the melt bath (36a) is provided to deposit liquid metal (38a) onto the roller (32a), **characterized in that** the metal fibres (14a; 14b) are deposited in the method step via a roller (32a; 32b) of the alignment unit (30a; 30b), said roller rotating at least temporarily and/or oscillating in an axial direction, wherein the metal fibres (14a; 14b) are produced in the method step by the roller (32a; 32b), wherein a plurality of layers (18a; 20a; 18b; 20b) of metal fibres (14a; 14b) are arranged one above the other, wherein the metal fibres (14a) are layered one on top of the other at an angle of less than 5°.

2. Method according to Claim 1, **characterized in that** in the method step the metal fibres (14a; 14b) are deposited onto at least one substrate (16a; 16b).

3. Method according to Claim 2, **characterized in that** the metal fibres (14a; 14b) are deposited onto the substrate (16a; 16b) in a directed manner.

4. Method according to Claim 2 or 3, **characterized in that** the metal fibres (14a; 14b) are connected to the substrate (16a; 16b).

5. Method according to one of the preceding claims, **characterized in that** a diameter of the metal fibres (14a; 14b) is adjusted by means of at least one roller property, in particular a groove geometry of grooves (34a; 34b) and/or a wetting property, of the roller (32a; 32b) .

6. Method according to one of the preceding claims, **characterized in that** a waviness of the metal fibres (14a; 14b) is adjusted during production by means of a rotational speed of the roller (32a; 32b) and/or by means of a gas inflow to the metal fibres (14a; 14b).

7. Method according to one of the preceding claims, **characterized in that** a structure (22a; 22b) consisting of the metal fibres (14a; 14b) is calendered in at least one method step.

8. Flow plate (10a; 10b) produced by means of a method according to one of Claims 1 to 7, wherein the flow plate (10a; 10b) comprises at least one flow element (12a; 12b) which at least partially consists of metal fibres (14a; 14b), wherein a plurality of layers (18a; 20a; 18b; 20b) of metal fibres (14a; 14b) are arranged one above the other, wherein the metal fibres (14a) are layered one on top of the other at an angle of less than 5°.

## Revendications

1. Procédé de fabrication d'une plaque de conduction (10a ; 10b) pour une pile à combustible, notamment une pile à combustible PEM, et/ou un électrolyseur, la plaque de conduction (10a ; 10b) présentant au moins un élément de conduction (12a ; 12b) qui est constitué au moins partiellement de fibres métalliques (14a ; 14b) ; dans au moins une étape de procédé, les fibres métalliques (14a ; 14b) étant alignées au moyen d'au moins une unité d'alignement (30a ; 30b), l'unité d'alignement (30a ; 30b) comprenant un bain de fusion (36a), le bain de fusion (36a) étant prévu pour déposer du métal liquide (38a) sur le rouleau (32a),
**caractérisé en ce que** les fibres métalliques (14a ; 14b) sont déposées dans l'étape de procédé par l'intermédiaire d'un rouleau (32a ; 32b) de l'unité d'alignement (30a ; 30b) qui tourne au moins temporairement et/ou oscille dans la direction axiale, les fibres métalliques (14a ; 14b) étant fabriquées dans l'étape de procédé par le rouleau (32a ; 32b), plusieurs couches (18a ; 20a ; 18b ; 20b) de fibres métalliques (14a ; 14b) étant agencées les unes au-dessus des autres, les fibres métalliques (14a) étant stratifiées les unes sur les autres selon un angle qui est inférieur à 5°.

2. Procédé selon la revendication 1, **caractérisé en ce que**, dans l'étape de procédé, les fibres métalliques (14a ; 14b) sont déposées sur au moins un substrat (16a ; 16b) .

3. Procédé selon la revendication 2, **caractérisé en ce que** les fibres métalliques (14a ; 14b) sont déposées sous forme orientée sur le substrat (16a ; 16b).

4. Procédé selon la revendication 2 ou 3, **caractérisé en ce que** les fibres métalliques (14a ; 14b) sont reliées au substrat (16a ; 16b).

5. Procédé selon l'une quelconque des revendications précédentes, **caractérisé en ce qu'**un diamètre des fibres métalliques (14a ; 14b) est ajusté au moyen d'au moins une propriété de rouleau, notamment une géométrie de rainure de rainures (34a ; 34b) et/ou une propriété de mouillage, du rouleau (32a ; 32b).

6. Procédé selon l'une des revendications précédentes, **caractérisé en ce qu'**une ondulation des fibres métalliques (14a ; 14b) est ajustée au moyen d'une vitesse de rotation du rouleau (32a ; 32b) et/ou au moyen d'un flux de gaz sur les fibres métalliques (14a ; 14b) lors de la fabrication.

7. Procédé selon l'une quelconque des revendications précédentes, **caractérisé en ce qu'**une structure (22a ; 22b) constituée des fibres métalliques (14a ; 14b) est calandrée dans au moins une étape de procédé.

8. Plaque de conduction (10a ; 10b), fabriquée au moyen d'un procédé selon l'une quelconque des revendications 1 à 7, la plaque de conduction (10a ; 10b) présentant au moins un élément de conduction (12a ; 12b) qui est constitué au moins partiellement de fibres métalliques (14a ; 14b), plusieurs couches (18a ; 20a ; 18b ; 20b) de fibres métalliques (14a ; 14b) étant agencées les unes au-dessus des autres, les fibres métalliques (14a) étant stratifiées les unes sur les autres selon un angle qui est inférieur à 5°.
